(19) Europäisches Patentamt

European Patent Office

Office européen des brevets

(11) Veröffentlichungsnummer : **0 388 717 B1**

# (12) EUROPÄISCHE PATENTSCHRIFT

(45) Veröffentlichungstag der Patentschrift :
**15.01.92 Patentblatt 92/03**

(51) Int. Cl.$^5$ : **F02M 3/07, F02M 69/32**

(21) Anmeldenummer : **90104427.1**

(22) Anmeldetag : **08.03.90**

(54) **Vorrichtung zur Bemessung der Leerlaufluft von Brennkraftmaschinen.**

(30) Priorität : **22.03.89 DE 3909396**

(43) Veröffentlichungstag der Anmeldung :
**26.09.90 Patentblatt 90/39**

(45) Bekanntmachung des Hinweises auf die
Patenterteilung :
**15.01.92 Patentblatt 92/03**

(84) Benannte Vertragsstaaten :
**DE FR GB IT SE**

(56) Entgegenhaltungen :
**EP-A- 0 108 936**
**DE-A- 3 039 521**
**DE-A- 3 337 590**
**DE-C- 3 633 260**
**US-A- 3 553 619**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Lemberger, Heinz
Nelkenstrasse 2
W-8043 Unterföhring (DE)**

EP 0 388 717 B1

## Beschreibung

Die Erfindung bezieht sich auf eine Vorrichtung zur Bemessung der Leerlaufluft von Brennkraftmaschinen gemäß dem Oberbegriff des Patentanspruches 1.

Derartige Vorrichtungen sind bei mit "Motronic" ausgerüsteten Brennkraftmaschinen mit einem elektrischen Stellmotor ausgestattet. Weiter wirkt bei einer bekannten Bauart dieser elektrische Stellmotor auf das Stellorgan lediglich in Öffnungsrichtung, während das Stellorgan in Schließrichtung von einer Feder beaufschlagt ist. In der DE-OS 3234468 ist zu diesem Stand der Technik ausgeführt, daß bei Unterbrechung der Stromzufuhr zum elektrischen Stellmotor das Stellorgan durch das Federelement in eine Stellung bewegbar ist, durch die eine Mindestöffnung des Drosselquerschnittes sichergestellt wird. Erzielt ist damit eine Leerlauf-Vorrichtung mit einem Notlaufquerschnitt.

Der Nachteil dieser bekannten Leerlauf-Vorrichtung liegt darin, daß eine von der Außentemperatur abhängige elektrische Wicklungskraft (Widerstandsänderung) gegen eine konstante Federkraft zu arbeiten hat. Dies führt zu unerwünschten Unlinearitäten der Regel-Kennlinie.

Gegenstand der vorerwähnten DE-OS 3234468 ist eine Leerlauf-Vorrichtung mit einem elektrischen Stellmotor, der in Öffnungs- und Schließrichtung antreibend wirkt. Bei dieser bekannten Vorrichtung ist dem durch das Stellorgan zu steuernden Drosselquerschnitt eine gesonderte Öffnung zur Bildung eines Notlaufquerschnittes benachbart zugeordnet. Das Stellorgan ist hierbei allerdings so gestaltet, daß es in einer bestimmten Stellung sowohl den Drosselquerschnitt als auch den Notlaufquerschnitt überdeckt und in dieser Stellung durch eine mechanische Blockierung des Stellorganes der Notlaufquerschnitt außer Funktion gesetzt ist. Die lediglich über Leckagen der Brennkraftmaschine zuströmende Luft genügt für ein sicheres Starten nicht.

In beiden vorgenannten Fällen dient eine bei Außerbetriebsetzung der Brennkraftmaschine aktivierbare Zusatzeinrichtung zur Aufsteuerung eines Notlaufquerschnittes durch das Stellorgan.

Der Erfindung liegt die Aufgabe zugrunde, eine gattungsgemäße Vorrichtung derart auszubilden, daß unter Vermeidung vorstehend genannter Nachteile ein vorbestimmter Notlaufquerschnitt gewährleistet ist.

Gelöst wird diese Aufgabe mit den im Kennzeichen des Patentanspruches 1 angegebenen Mitteln. Mit der Erfindung wird eine als Notlaufquerschnitt dienende Mindestöffnung des Drosselquerschnittes durch zwei auf gegenseitige Einwirkung angeordnete Magnete erzielt, wobei einer der am Stellorgan oder an einem Gehäuse für das Stellorgan angeordneten Magnete erst bei Außerbetriebsetzung der Brennkraftmaschine seine volle Wirkung erzielt. Damit ist in vorteilhafter Weise in jedem Fall beim Starten der Brennkraftmaschine ein Notlaufquerschnitt sichergestellt. Bei anschließendem Betrieb der Brennkraftmaschine und aktiver Leerlauf-Vorrichtung ist einer der Magnete im wesentlichen außer Wirkung gesetzt, so daß eine Regelung bzw. eine lineare Kennlinie der Leerlauf-Vorrichtung in vorteilhafter Weise nicht gestört ist.

Eine im Aufbau einfache Zusatzeinrichtung wird nach Anspruch 2 durch die Anordnung zweier Permanentmagnete erreicht, wobei einer der Permanentmagnete zur wesentlichen Schwächung seines Magnetfeldes bei aktiver Leerlauf-Vorrichtung mit einer elektrischen Spule entsprechend kombiniert ist. Der wesentliche Vorteil dieser Zusatzeinrichtung ist in dem selbsttätigen Wirksamwerden zu sehen, sobald die Brennkraftmaschine aus irgendeinem Grund inaktiv wird, z.B. nach einem Kaltstart abstirbt.

Eine weitere vorteilhafte Ausgestaltung ist in Anspruch 3 beschrieben mit dem Vorteil, daß mit dieser Ausgestaltung eine zusätzliche Antriebseinrichtung des Stellorganes ohne Fremdenergie geschaffen ist. Damit ist der weitere Vorteil verbunden, daß bei einer fehlerhaft arbeitenden Leerlauf-Vorrichtung kein größerer Drosselquerschnitt als der vorbestimmte Notlaufquerschnitt eingestellt bzw. angesteuert wird. Eine durch eine einfache Gestaltung des nichtsteuerbaren Permanentmagneten für ein als Drehschieber gestaltetes Stellorgan ist hierfür im Anspruch 4 beschrieben.

Schließlich besagt Anspruch 5, daß die Erfindung auch für ein als Hubkolben dienendes Stellorgan geeignet ist.

Die Erfindung ist anhand eines in der Zeichnung dargestellten Ausführungsbeispiels beschrieben. Es zeigt

Fig. 1     eine Vorrichtung zur Bemessung der Leerlaufluft, teilweise im Längsschnitt dargestellt,

Fig. 2     eine Stirnansicht der Vorrichtung mit einer Ansicht im Querschnitt gemäß der Linie II-II in Fig. 1.

Eine Vorrichtung 1 zur Bemessung der Leerlaufluft einer nicht dargestellten Brennkraftmaschine umfaßt ein Gehäuse 2 mit einem Zuströmstutzen 3 und einem Abströmstutzen 4. Weiter umfaßt die Vorrichtung 1 einen elektrischen Stellmotor 5, der zum Antrieb eines trommelartigen Stellorganes 6 dient. Das Stellorgan 6 umfaßt eine stirnseitig dem Zuströmstutzen 3 zugeordnete Steueröffnung 7 sowie eine am Trommelumfang dem Abströmstutzen 4 zugeordnete Abströmöffnung 8. Der Stellmotor 5 wirkt zur Bemessung der jeweiligen Leerlaufluftmenge über die Steueröffnung 7 auf das Stellorgan 6 in beide Drehrichtungen antreibend ein. Im stromlosen Zustand verbleibt somit das Stellorgan 6 in der vom Stellmotor 5 vermittelten Position stehen.

2

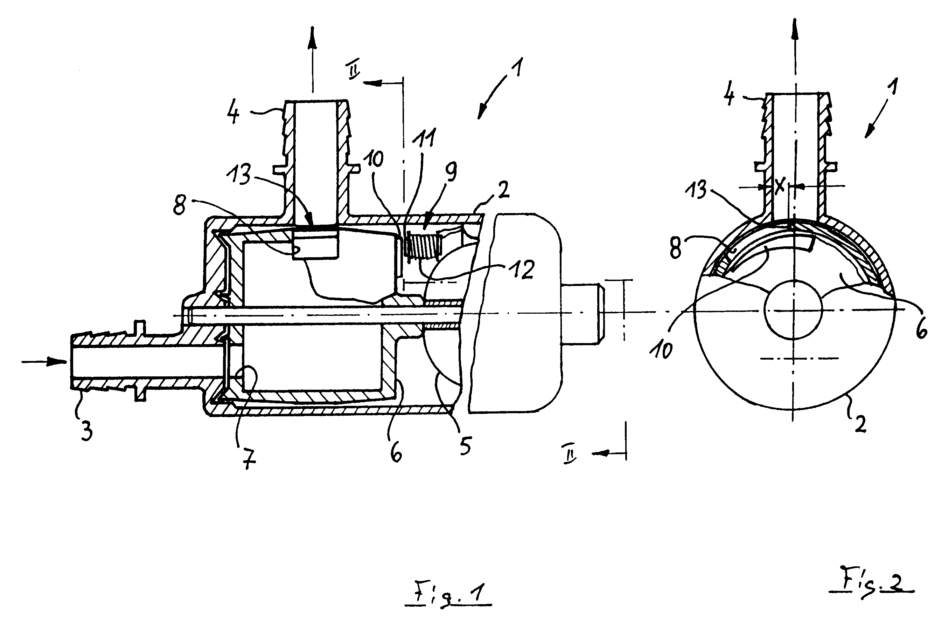

Um bei jedem Start der Brennkraftmaschine auch bei stromlosem Stellmotor eine Mindestluftmenge über die Vorrichtung 1 durch einen sog. Notlaufquerschnitt sicherzustellen, verfügt die Vorrichtung 1 über eine Zusatzeinrichtung 9, die das Stellorgan 6 mit der Steueröffnung 7 und/oder der Abströmöffnung 8 in eine Mindestöffnung des Drosselquerschnittes des Zuströmstutzens 3 und/oder des Abströmstutzens 4 steuert. Gemäß Fig. 2 wird die als Notlaufquerschnitt dienende Mindestöffnung aus dem Zusammenspiel des Drosselquerschnittes des Abströmstutzens 4 und der Abströmöffnung 8 erzielt, wobei eine Steuerkante der Abströmöffnung um das Maß x von der Innenwandung des Abströmstutzens 4 beabstandet ist. Der am Abströmstutzen 4 durch das Abstandsmaß x repräsentierte Notlaufquerschnitt der Vorrichtung 1 kann zugleich über die den Drosselquerschnitt des Zuströmstutzens steuernde Steueröffnung 7 gegeben sein, so daß die in der DE-PS 3633260 für das trommelartige Stellorgan 6 beschriebenen Vorteile ebenfalls vorliegen.

Das für einen Notlaufquerschnitt repräsentative Abstandsmaß x wird bei stromlosem Stellmotor 5 über die Zusatzeinrichtung 9 bewirkt, die zwei auf gegenseitige Einwirkung angeordnete Permanentmagnete 10 und 11 umfaßt. Der Permanentmagnet 10 ist auf der dem Stellmotor 5 zugewandten Stirnseite des Stellorganes 6 im äußeren Umfangsbereich angeordnet und von sichelförmiger Gestalt. Er ist vorzugsweise aus einem Sintermaterial und so gepolt, daß die dem Permanentmagneten 11 zugewandte Stirnseite mit dem Permanentmagneten eine ungleichnamige Polung bildet. Der beispielsweise stabförmige Permanentmagnet 11 ist mit einer elektrischen Spule 12 kombiniert. Die Spule 12 ist elektrisch so gepolt, daß das von ihr erzeugte Magnetfeld das Magnetfeld des Permanentmagneten bei einwandfrei arbeitender Vorrichtung 1 wesentlich abschwächt. Damit ist eine Steuerung bzw. Regelung des Stellorganes 6 über den Stellmotor 5 ohne Störeinfluß gegeben. Wird dagegen die Spule 12 stromlos, wird der Permanentmagnet 11 voll wirksam und bewirkt im Zusammenwirken mit dem Permanentmagneten 10 die Positionierung des Stellorganes 6 um das Abstandsmaß x der Steuerkante 13 der Abströmöffnung 8 von der Innenwandung des Abströmstutzens 4.

Wie weiter oben bereits beschrieben und aus der Fig. 2 ersichtlich, ist der nichtsteuerbare Permanentmagnet 10 an der Stirnseite des Stellorganes 6 von sichelförmiger Gestalt. Er weist damit eine zu den Bewegungsrichtungen des Stellorganes 6 gleichgerichtete Längenausdehnung mit in den entgegengesetzten Endbereichen unterschiedlichen Feldliniendichten auf, wobei der breite Endbereich des Permanentmagneten 10 mit der großen Feldliniendichte der für den Notlaufquerschnitt relevanten Position des Stellorganes 6 zugeordnet ist. Damit ist der entgegengesetzte, spitze Endbereich des Permanentmagneten 10 mit der geringen Feldliniendichte einer der größten Öffnung des Drosselquerschnittes entsprechenden Position des Stellorganes 6 zugeordnet. Werden im letztgenannten Fall der Stellmotor 5 und die Spule 9 des Permanentmagneten 11 jeweils stromlos, bewirken die beiden Permanentmagnete 10 und 11 der Zusatzeinrichtung 9 eine Drehung des Stellorganes 6 in Schließrichtung bis zum Erreichen des für den Notlaufquerschnitt repräsentativen Abstandsmaßes x. Mit der die Magnete 10 und 11 umfassenden Zusatzeinrichtung ist somit neben der Positionierung für einen erforderlichen Notlaufquerschnitt der Vorrichtung 1 auch eine Antriebseinrichtung des Stellorganes 6 zur Erzielung des Notlaufquerschnittes ohne Zufuhr von Fremdenergie erzielt. Damit ist bei einem Ausfall des Stellmotors 5 auch sichergestellt, daß das Stellorgan 6 selbsttätig bis zum Erreichen des Notlaufquerschnittes verstellt wird und ein unkontrolliertes Hochdrehen der Brennkraftmaschine durch im wesentlichen freie Drosselquerschnitte mit Sicherheit vermieden ist. Der Zusatzeinrichtung 9 kommt somit eine Sicherheitsfunktion zu.

Das vorstehend beschriebene Ausführungsbeispiel bezieht sich vorzugsweise auf eine Drehsteller-Vorrichtung 1. Die Erfindung kann aber auch bei sog. Hubsteller-Vorrichtungen Verwendung finden.

**Patentansprüche**

1. Vorrichtung zur Bemessung der Leerlaufluft von Brennkraftmaschinen,
— umfassend einen Stellmotor (5) zum Antrieb eines Stellorganes (6) zur Änderung eines Drosselquerschnittes,
— wobei eine bei Außerbetriebsetzung der Brennkraftmaschine aktivierbare Zusatzeinrichtung (9) das Stellorgan in eine Mindestöffnung (Maß "x") des Drosselquerschnittes steuert, dadurch gekennzeichnet,
— daß die Zusatzeinrichtung (9) zwei auf gegenseitige Einwirkung angeordnete Magnete (10, 11) umfaßt,
— wobei einer der Magnete beim Betrieb der Brennkraftmaschine im wesentlichen außer Wirkung gesetzt ist.

2. Vorrichtung nach Anspruch 1, dadurch gekennzeichnet,
— daß zwei Permanentmagnete (10, 11) vorgesehen sind, und
— daß einer der Permanentmagnete zur wesentlichen Schwächung seines Magnetfeldes mit einer elektrischen Spule (12) kombiniert ist.

3. Vorrichtung nach Anspruch 1 und 2, dadurch gekennzeichnet,

— daß der nichtsteuerbare Permanentmagnet (10) eine zur Bewegungsrichtung des Stellorganes (6) gleichgerichtete Längenausdehnung mit in den entgegengesetzten Endbereichen unterschiedlichen Feldliniendichten aufweist,

— wobei der Endbereich mit geringerer Feldliniendichte bei größter Öffnung des Drosselquerschnittes dem Wirkungsbereich des steuerbaren Permanentmagneten (11) benachbart ist.

4. Vorrichtung nach den Ansprüchen 1 bis 3, dadurch gekennzeichnet, daß der nichtsteuerbare Permanentmagnet (10) im Umfangsbereich eines als Drehschieber gestalteten Stellorganes (6) angeordnet und von sichelförmiger Gestalt ist.

5. Vorrichtung nach den Ansprüchen 1 bis 3, dadurch gekennzeichnet, daß der nichtsteuerbare Permanentmagnet an einem als Hubkolben ausgebildeten Stellorgan angeordnet ist.

## Claims

1. An idle air measuring device for internal combustion engines, comprising a servomotor (5) for driving a regulating unit (6) for altering a throttle cross-section, and, when the engine is out of action, an additional device (9) can be actuated so as to move the regulating unit into a position where the throttle cross-section has a minimum value "x", characterised in that the additional device (9) comprises two magnets (10, 11) acting on one another, one magnet being substantially put out of operation when the engine is running.

2. A device according to claim 1, characterised in that two permanent magnets (10, 11) are provided, and one of the permanent magnets is combined with an electric coil (12) so as substantially to weaken its magnetic field.

3. A device according to claims 1 and 2, characterised in that the non-controllable permanent magnet (10) extends longitudinally in the direction of motion of the regulating unit (6) and has different magnetic fluxes at its opposite end regions, the end region having the lower flux being adjacent the range of operation of the controllable permanent magnet (11) when the throttle cross-section is at a maximum.

4. A device according to claims 1 to 3, characterised in that the non-controllable permanent magnet (10) is crescent-shaped and disposed in the peripheral region of a regulating unit (6) in the form of a rotary slide valve.

5. A device according to claims 1 to 3, characterised in that the non-controllable permanent magnet is disposed on a regulating unit in the form of a lifting piston.

## Revendications

1. Dispositif pour la mesure de l'air de ralenti de moteurs à combustion interne :

— comprenant un moteur de commande (5) pour l'entraînement d'un organe de commande (6) servant à modifier une section transversale d'étranglement,

— dans lequel un dispositif additionnel (9) pouvant être mis en action, quand on arrête le fonctionnement du moteur à combustion interne, commande l'organe de commande pour qu'il y ait une ouverture minimale ("x") de la section transversale d'étranglement, dispositif caractérisé en ce que le dispositif additionnel (9) comprend deux aimants (10, 11) à action réciproque, l'un des aimants quand le moteur à combustion interne est en fonctionnement étant mis essentiellement hors d'action.

2. Dispositif selon la revendication 1, caractérisé en ce que :

— il est prévu deux aimants permanents (10, 11) et

— l'un des aimants permanents est combiné avec une bobine électrique (12) pour une atténuation sensible de son champ magnétique.

3. Dispositif selon les revendications 1 et 2, caractérisé en ce que :

— l'aimant permanent (10) non commandable présente une extension longitudinale dirigé dans la même direction que le sens du mouvement de l'organe de commande (6) avec des densités de lignes de flux différents dans les zones terminales opposées,

— la zone terminale avec la densité de lignes de flux la plus faible étant voisine, quand l'ouverture de la section transversale d'étranglement est la plus grande, de la zone d'action de l'aimant permanent commandable (11).

4. Dispositif selon les revendications 1 à 3, caractérisé en ce que l'aimant permanent non commandable (10) est disposé dans la zone périphérique d'une organe de commande (6) ayant la configuration d'un tiroir rotatif et a la forme d'un croissant.

5. Dispositif selon les revendications 1 à 3, caractérisé en ce que l'aimant permanent non commandable est disposé sur un organe de commande constitué comme un piston alternatif.

Fig. 1

Fig. 2

EP 0 388 717 B1